# EUROPEAN PATENT APPLICATION

(11) **EP 1 655 673 A2**
(43) Date of publication of application: **10.05.2006**
(21) Application number: 05110306.7
(22) Date of filing: 03.11.2005
(51) Int. Cl.: G06F 17/27, G06F 17/22

(54) **Automated collation creation**

(30) Priority: 05.11.2004 US 981843
(71) Applicant: MICROSOFT CORPORATION, Redmond, WA 98052 (US)
(72) Inventor: Wissink, Catherine A., Redmond, WA 98052 (US); Kaplan, Michael S., Redmond, WA 98052 (US)
(74) Representative: Grünecker, Kinkeldey, Stockmair & Schwanhäusser Anwaltssozietät

(57) **Abstract**

A collation creation process is provided to automatically establish collation support for sorted linguistic data. The sorted linguistic data is examined to determine if it matches an existing collation support. If not, a new collation support is created for the sorted linguistic data. The provider of the sorted linguistic data may participate in the collation creation process by answering queries concerning the sorted linguistic data. The provider's input is integrated into the sorted linguistic data before the collation creation process is applied to the sorted linguistic data. A user interface is provided that enables the interaction between the provider of the sorted linguistic data and the collation creation process. The user interface provides visual cues identifying distinctions among the strings in the sorted linguistic data.

## Description

### FIELD OF THE INVENTION

The present invention relates to a computer program and, more particularly, to a computer program for collating linguistic data.

### BACKGROUND OF THE INVENTION

One of the greatest challenges in the globalization of computer technologies is to properly handle the numerous written languages used in different parts of the world. Languages may differ greatly in the linguistic symbols they use and in their grammatical structures. Consequently, it can be a daunting task to support most, if not all, languages in various forms of computer data processing.

To facilitate the support of different languages by computers, a standardized coding system, known as Unicode, was developed to uniquely identify every symbol in a language with a distinct numeric value, i.e., codepoint, and a distinct name. Codepoints are expressed as hexadecimal numbers with four to six digits. For example, the English letter "A" is identified by the codepoint 0041, while the English letter "a" is identified by codepoint 0061, the English letter "b" is identified by the codepoint 0062, and the English letter "c" is identified by the codepoint 0063 in the Unicode system.

A fundamental operation on linguistic characters (or graphemes) of a given language is collation, which may be defined as sorting strings according to a set of rules that is culturally correct to users of a particular language. Collation is used any time a user orders linguistic data or searches for linguistic data in a logical fashion within the structure of a given language.

Support of collation on a computer requires an in-depth understanding of the language. Specifically, there must be a good understanding of the graphemes used in the language and the relationship between the graphemes/phonemes and the Unicode codepoints used to construct them. For example, in English, a speaker expects a word starting with the letter "Q" to sort after all words beginning with the letter "P" and before all words starting with the letter "R." As another example, in the Traditional Chinese, the ideographs are often stored according to their pronunciations based on the "bopomofo" phonetic system as well as by the numbers of strokes in the characters. Further, the proper sorting of the graphemes also has to take into account variations on the graphemes. Common examples of such variations include casings (upper or lower case) of the symbols and modifiers (diacritics, Indic matras, vowel marks) applied to the symbols.

Collation, i.e.. sorting, is one of the most fundamental features that a user expects to simply work. Ideally, collation should be transparent. People simply expect that when they click on the top of a column in Windows® Explorer, that the column will be sorted according to their linguistic expectations. Such expectation may be easy to meet from a technical perspective for simple languages, such as English; however, when support for additional languages is needed, such support can be more complicated.

The challenges in achieving proper collation are due to several factors. For example, people usually have a clear idea of how the information they choose to collate should be ordered. However, few people can really describe the rules by which collation works for any but the simplest of languages, such as English. To make the matter even more complicated, collations that are appropriate for one language are often not appropriate for another; in fact, many collation schemes contradict each other.

Furthermore, people who generally understand the technical issues of collation do not understand the language or the linguistic structure. Contrariwise, experts in languages often lack the technical expertise to provide collation in a form that can be used in a traditional, multi-weighted collation format. In addition, existing platforms providing collation extensibility require full collation information as input. This requires extensive technical skill, knowledge of internal methodology and structures, and overt collation knowledge.

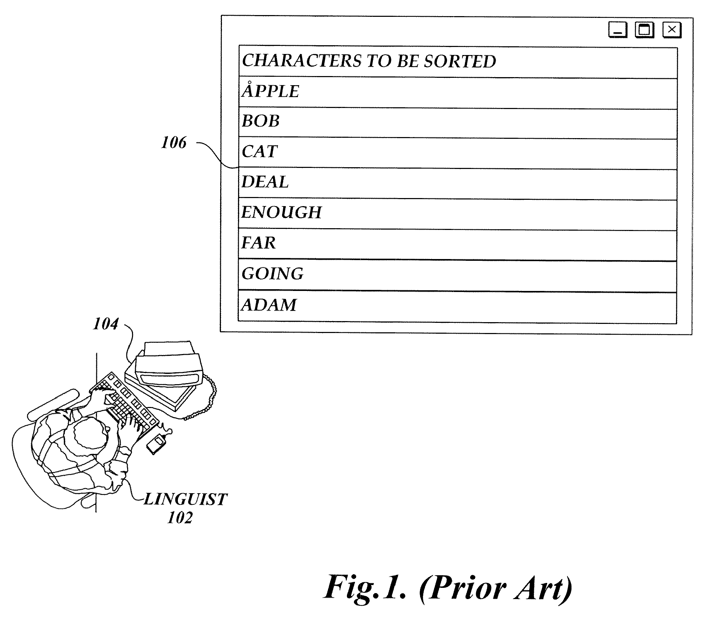

Usually, collation is done manually by professional collation providers, such as professional linguists. FIGURE 1 illustrates a linguist 102 operating a computer 104 to collate linguistic data, such as the set of strings 106. Linguistic data can be comprised of as few as a handful of strings or as many as tens of thousands of strings and characters included in a language. However, a single professional collation provider, or even a small group of them, can only do so much at a time. Thus there is a need to automate the collation process so that collation support for a given language can be easily provided.

Additionally, different institutions often need the capability of collating data in a linguistically appropriate fashion. Such institutions, for example, the U.S. Homeland Security Agency, may prefer not to share data with a professional collation provider. Therefore, there is a need to provide an automated collation support so as to allow data to be collated in a private matter.

In summary, proper collation support requires a comprehensive understanding of the language of the linguistic structure. Manually input collation information by professional collation providers, such as linguists, limits the ability to add collation support for linguistic data. As a result, there is a need to automate the collation process such that collation support can be easily extended for any given language and collation can be done by a general user when privacy is preferred. The invention described below is directed to addressing this need.

### SUMMARY OF THE INVENTION

The invention is directed to a tool that automatically establishes collation support for sorted linguistic data. The tool analyzes the sorted linguistic data to identity the underlying collation rules. During the analyzing process, the tool may ask the user who provided the sorted linguistic data iterative questions concerning the sorted linguistic data, thus collaborating with the user in reaching a correct collation support for the sorted linguistic data. The tool may further test the resultant collation support by sorting test data provided by the user.

In accordance with one aspect of the invention, analyzing the sorted linguistic data to establish collation support includes searching existing collation support schemes and locating a matching collation support scheme for the sorted linguistic data. If no existing collation support scheme is available for the sorted linguistic data, a new collation support is established by analyzing the sorted linguistic data.

In accordance with another aspect of the invention, to establish a new collation support based on the sorted linguistic data, each character in each string contained in the sorted linguistic data is analyzed to identify the underlying weighting structure, beginning with the first character in each string. When analyzing each character in a string, the strings in the sorted linguistic data are first grouped based on the primary weight, i.e., the alphabetic weight, of the character in each string. The strings resulting from the first grouping are then further grouped based on the secondary weight, i.e., the diacritic weight, of the character in each string. The strings are then further grouped based on the tertiary weight, i.e., the casing weight, of the character in each string. To establish a new collation support based on the sorted linguistic data further includes analyzing the behaviors of special characters, such as diacritics, combining marks, and scripts.

In accordance with yet another aspect of the invention, when analyzing the sorted linguistic data to establish collation support for the sorted linguistic data, the sorted linguistic data is preprocessed. The preprocessing first validates the sorted linguistic data to ensure that it is consistent in ordering and complete in coverage. Preferably, validating the sorted linguistic data includes identifying a problem in the sorted linguistic data, requesting correction to the sorted linguistic data, and applying the correction to the sorted linguistic data. Preprocessing the sorted linguistic data may also include normalizing the sorted linguistic data.

In accordance with yet another aspect of the invention, after establishing collation support for the sorted linguistic data, the collation support may be verified, preferably by the user who provided the sorted linguistic data. The user may correct the collation support by adjusting the ordering of the sorted linguistic data, which has been collated by the collation support. Any changes provided by the user are integrated into the sorted linguistic data, which is analyzed again to establish a correct collation support reflecting the changes made by the user.

In accordance with a further aspect of the invention, after establishing the collation support for the sorted linguistic data, test data may be provided to test the collation support. The test data can be sorted itself to verify if the application of the collation support on the sorted test data maintains the ordering of the test data. The test data can also be unsorted. Upon applying the collation support to the unsorted test data, the ordering of the collated test data is preferably examined to verify whether it reflects the user's expectation. If the collated test data does not meet the user's expectation, the ordering of the test data may be adjusted by the user, and the adjusted test data may then be integrated into the sorted linguistic data, which may be analyzed again to generate the correct collation support.

In accordance with another aspect of the invention, the collation support information may be built into a binary file for future collation use. The entire sorted linguistic data may also be saved as a word list.

The invention may further include a user interface that enables a user providing the sorted linguistic data to interact with the process of establishing collation support based on the sorted linguistic data ("collation creation"). The collation creation process sends a query to the user interface concerning the sorted linguistic data. Such a query can ask for clarification of behavior of a character, or for confirmation of a collation pattern inherent in the sorted linguistic data. The user may answer the query by, for example, providing additional data or modifying the sorted linguistic data. The user's input is preferably integrated into the collation creation process in real time to generate the collation support anticipated by the user. The user may also enter tested data to verify whether the collation support resulting from the collation creation process collates the test data properly.

In accordance with one aspect of the invention, the user interface may attach visual cues to the sorted linguistic data after applying the identified collation support to the sorted linguistic data. The visual cues may indicate distinctions between two compared strings in the collated linguistic data. For example, the visual cue may indicate the break point of a string and the type of the weight difference at the break point. A break point of a string identifies the part of the string that actually caused the string to sort in its particular location.

In accordance with another aspect of the invention, the user interface may display queries concerning the sorted linguistic data. A query gives the user providing the sorted linguistic data an opportunity to confirm the collation and/or clarify the sorted linguistic data to produce correct collation support.

In accordance with a further aspect of the invention, the user interface includes a test surface, which uses sorted or unsorted test data from the user to test the identified collation support. The user may adjust the collated test data to suggest the correct collation support.

In summary, the invention enables the automatic generation of collation support based on sorted linguistic data. The invention also enables the user providing sorted linguistic data to guide the collation creation process, fully utilizing the user's knowledge of the sorted linguistic data and the user's expectation of the collation support to be generated. The invention thus enables a general user, rather a professional collation provider, to collate linguistic data.

### BRIEF DESCRIPTION OF THE DRAWINGS

The foregoing aspects and many of the attendant advantages of this invention will become more readily appreciated as the same become better understood by reference to the following detailed description, when taken in conjunction with the accompanying drawings, wherein:
FIGURE 1is a pictorial diagram illustrating a conventional way of collating linguistic data, wherein a professional collation provider such as a linguist manually collates linguistic data;
FIGURE 2 is a pictorial diagram illustrating one exemplary embodiment of the invention, which enables a general user, rather than a linguist, to collate linguistic data;
FIGURE 3 is a pictorial diagram illustrating one exemplary implementation of a user interface of a custom collation tool, wherein the main window of the user interface is shown;
FIGURE 4 is a pictorial diagram illustrating one exemplary implementation of a user interface of a custom collation tool, wherein an advanced window of the user interface is shown;
FIGURES 5A-5D are pictorial diagrams illustrating a user interface of a custom collation tool, wherein Unicode property information concerning linguistic data is shown;
FIGURES 6A-6C are pictorial diagrams illustrating one exemplary implementation of a user interface for a custom collation tool, wherein normalization forms concerning linguistic data are shown.
FIGURES 7A-7B are pictorial diagrams illustrating one exemplary implementation of a test user interface for a custom collation tool;
FIGURE 8 is a flow diagram illustrating one exemplary implementation of a collation creation process;
FIGURE 9 is a flow diagram illustrating one exemplary implementation of a routine for identifying collation support in custom data suitable for use in FIGURE 8;
FIGURE 10 is a flow diagram illustrating one exemplary implementation of a process for preprocessing custom data suitable for use in FIGURE 9;
FIGURE 11 is a flow diagram illustrating one exemplary implementation of a routine for communicating a problem identified in the custom data suitable for use in FIGURE 10;
FIGURE 12 is a flow diagram illustrating one exemplary implementation of a process for generating new collation support based on the custom data suitable for use in FIGURE 9; and
FIGURE 13 is a flow diagram illustrating one exemplary implementation of a process for testing eollation support suitable for use in FIGURE 8.

### DETAILED DESCRIPTION OF THE PREFERRED EMBODIMENT

Embodiments of the invention provide a computer-implemented method, a computing system, and a computer-readable medium for automatically creating collation support, i.e., collation creation, for linguistic data. In contrast to conventional collation creation, which requires the work of a professional collation provider, such as a linguist, the invention enables a general user to create collation support for a human language.

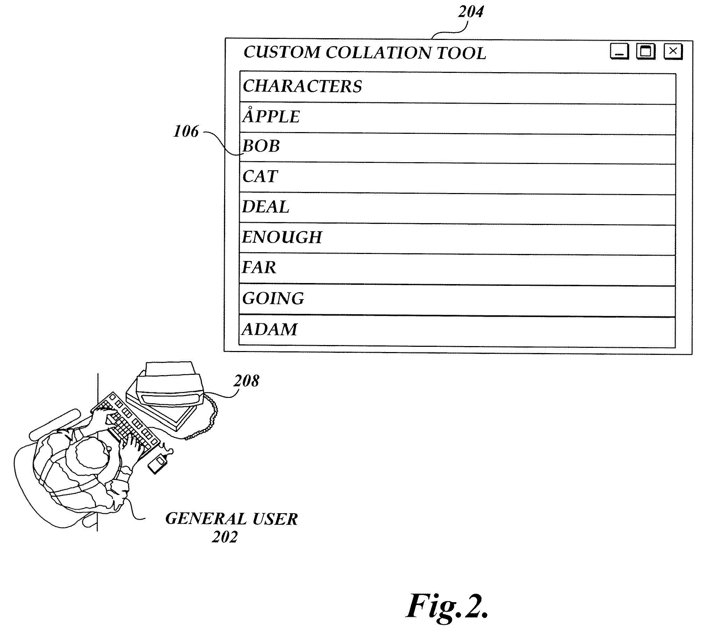

For example, FIGURE 2 illustrates a general user 202 providing linguistic data, such as the set of strings 106, to a custom collation tool 204 through a computing system 208. The computing system 208 includes a processor that executes the custom collation tool 204, and preferably a display that presents a user interface for the custom collation tool 204. The custom collation tool (hereinafter "TOOL") 204, upon receiving a sorted list of words or strings (hereinafter "custom data") from the general user 202 (hereinafter "CU"), analyzes the list to identify collation rules inherent in the ordering of the custom data. The analysis process is an inductive process, wherein the TOOL 204 asks the CU iterative questions to clarify any ambiguity or inconsistency in the custom data. However, the underlying collation weighting system used by the TOOL 204 to perform the analysis is completely hidden from the CU, thus making a very complicated collation creation process into an engaging and straightforward process for the CU. In some embodiments of the invention, after analyzing the custom data to identify collation rules, TOOL 204 allows the CU to input additional data to test the identified collation rules. Eventually, TOOL 204 may build a binary file containing the corresponding collation information and/or a file containing the complete custom data.

In embodiments of the invention. TOOL 204 contains two major components: a collation engine and a user interface. The collation engine performs an automatic collation creation process by analyzing custom data to identify collation rules controlling the ordering of the custom data. The user interface can be used to receive custom data from a CU. The user interface can also be used by the collation engine to present queries concerning the custom data. The user interface can further be used to test collation rules identified by the collation engine. One advantage of the user interface is that the complexity of the underlying collation creation process is completely hidden under the user interface. Another benefit of the user interface is that throughout the collation creation process, iterative queries are sent to the user interface so that the CU can clarify the custom data to ensure proper collation of creation based on custom data. Thus, the user interface enables an interactive approach that engages the CU in real time to collaboratively create the desired collation support for the custom data.

The following description first describes an exemplary implementation of a user interface for TOOL 204. An exemplary collation creation process illustrating functions of the collation engine is then described. The illustrative examples provided herein are not intended to be exhaustive or to limit the invention to the precise forms disclosed. Similarly, any steps described herein may be interchangeable with other steps or combinations of steps in the same or different order to achieve the same result.

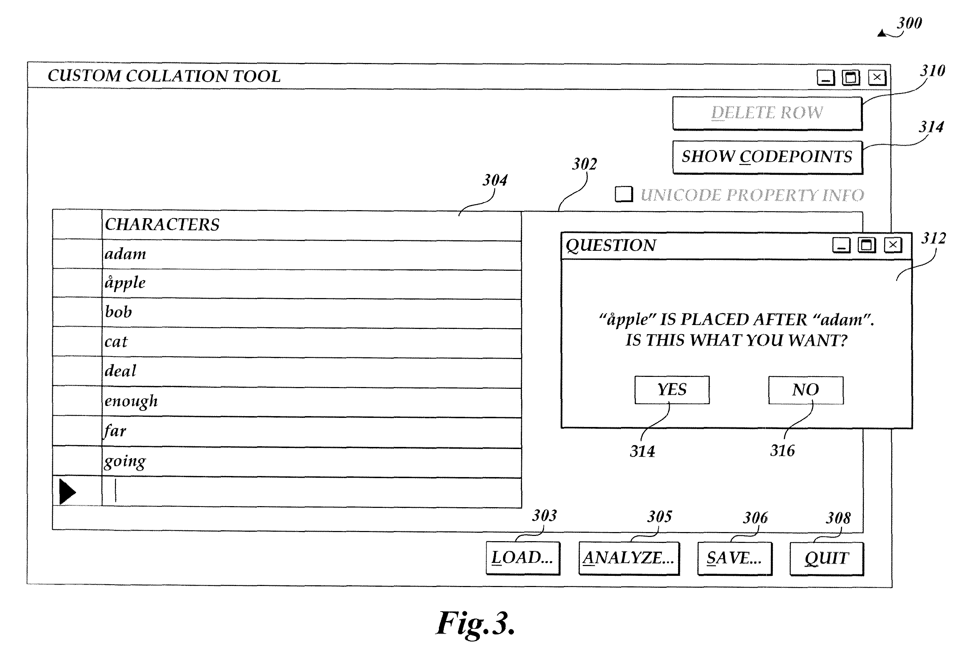

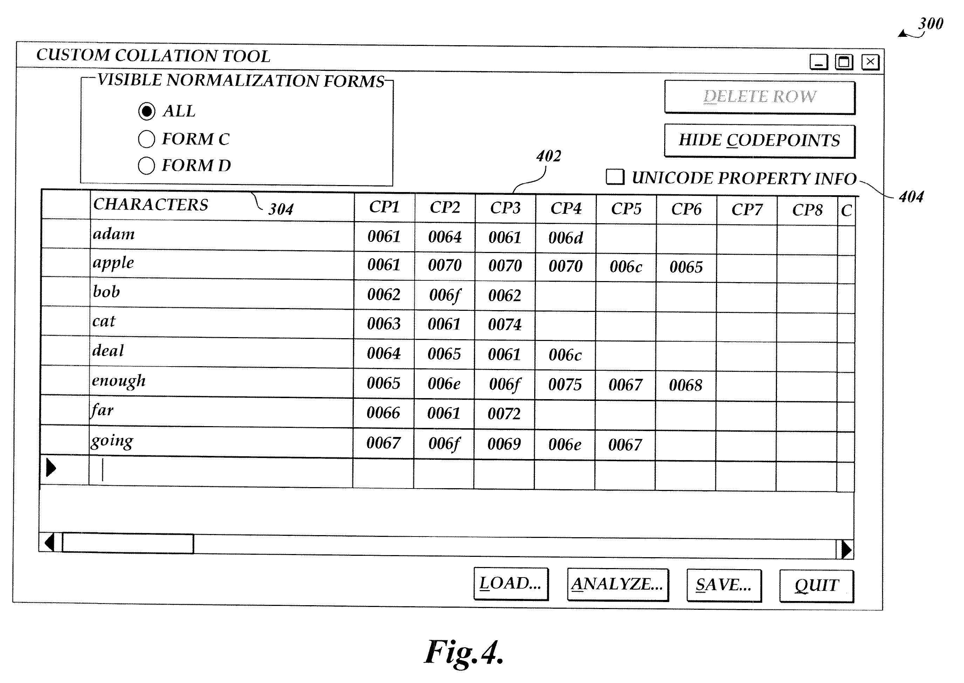

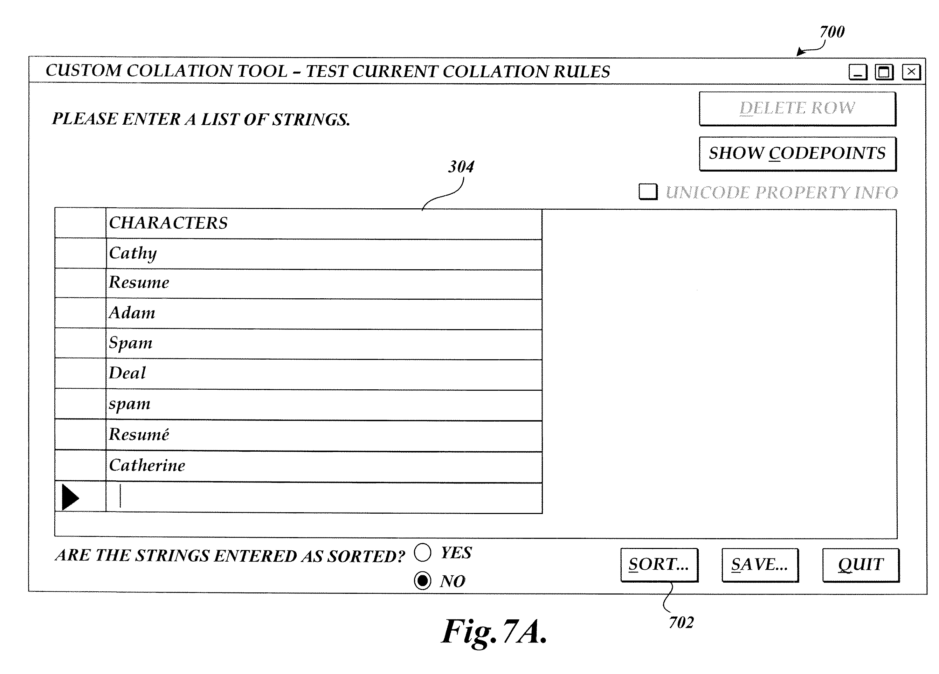

In embodiments of the invention, TOOL 204 includes a user interface that provides appropriate interactions with a CU. FIGURES 3-7B provide an exemplary implementation of such a user interface 300. The user interface 300 includes both a main window 302 (FIGURE 3) and an advanced window 402 (FIGURES 4-6C). In embodiments of the invention, user interface 300 further includes a test surface 700 (FIGURES 7A-7B) that allows the testing of collation rules identified by the collation engine.

FIGURE 3 illustrates one exemplary implementation of a main window 302. The main window 302 includes a first column 304, which is always visibte in the user interface 300 and lists the actual strings being analyzed. The first column 304 provides a simple view of a list of the actual strings, which are sorted according to a CU's expectations within the language. For example, in FIGURE 3, the main window 302 lists the sorted strings of "adam," "åpple," "bob," "cat," "deal," "enough," "far," and "going."

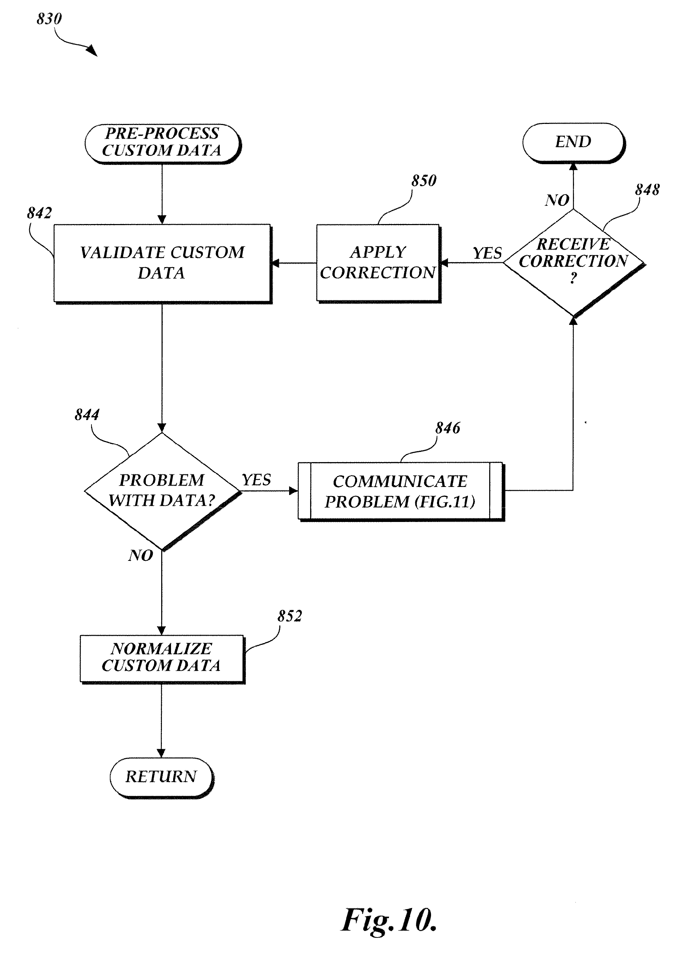

User interface 300 allows a CU to add new strings to first column 304 by actuating the "Load" button 303. In embodiments of the invention, there are three ways for inputting data into the ordered list 106 contained in first column 304. First, data can be inserted in an order chosen by a CU. As part of the insertion process, the CU ensures the data is verified, i.e., the data is sorted and the ordering is consistent with the target collation the CU is attempting to emulate. Secondly, a CU can have the TOOL 204 insert the data in a manner consistent with what the current, validated custom data demonstrates. In embodiments of the invention, custom data is validated after it goes through a validation process that ensures that the custom data is both consistent in ordering and complete in coverage. FIGURE 10 provides one exemplary implementation of the validation process and will be discussed later. Thirdly, for the languages that use ideographs, such as Chinese, Japanese, and Korean, there are standard indexes that dictionaries use. Data containing one of the indexes can also be loaded into the TOOL 204, i.e.. through the user interface 300. In some embodiments of the invention, a CU may also remove a string from first column 304 by actuating the "Delete Row" button 310.

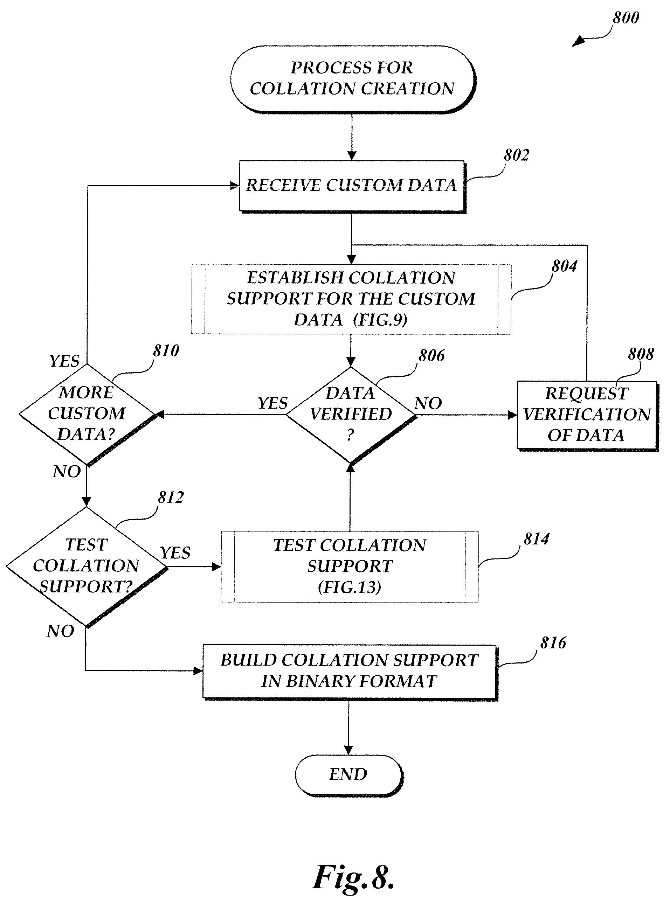

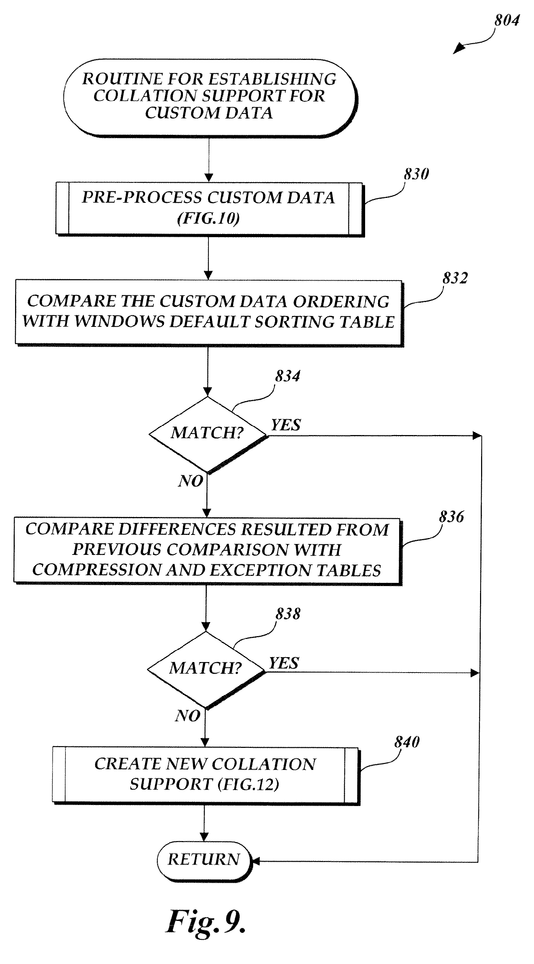

The user interface 300 further includes an "Analyze" button 305, the actuation of which initiates a collation creation process that analyzes the list of sorted strings contained in first column 304 to identify the underlying collation rules. In embodiments of the invention. the collation engine component of the TOOL 204 performs the analysis function. FIGURES 8-13 provide an exemplary implementation of the function performed by the collation engine and will be discussed in detail later.

User interface 300 also permits a CU to save the complete custom data by actuating the "Save" button 306. In embodiments of the invention, user interface 300 may also permit a CU to save the collation support information resulting from the collation creation process in a binary file. A CU may exit the user interface 300 by actuating the "Quit" button 308.

In embodiments of the invention, user interface 300 also provides visual cues such as underline, color, shading, etc., to indicate some of the important distinctions between two compared strings. Such important distinctions include the break point of a string, i.e., the part of the string that actually caused the string to sort in its particular location. For example, when comparing "Cathy" and "Catherine," the break point for each string would be the letter "y" and the letter "e," respectively, such that the string "Catherine" sorts before the string "Cathy." In some embodiments of the invention, the break point of a string is underlined.

User interface 300 may also provide visual cues indicating the type of weight difference at a break point. Generally, there are three types of weight differences: primary, secondary, and tertiary. Primary differences are generally alphabetic weights among characters. For example, the difference at the previously mentioned exemplary break points for the strings "Cathy" and "Catherine" ("y" versus "e") would be a primary difference. Secondary differences are generally diacritic weights. For example, when comparing the string "resume" and "resumé," the difference between the letter "e" and the letter "é" is a secondary difference. Tertiary differences are generally casing weight. For example, when comparing the string "Spam" and the string "spam," the difference in capitalization would be a tertiary difference. In an exemplary implementation of user interface 300, the break point of a string is colored differently to reveal the type of weight difference at the break point. For example, a red-colored break point implies a primary difference, a blue-colored break point implies a secondary difference, and a yellow-colored break point implies a tertiary difference.

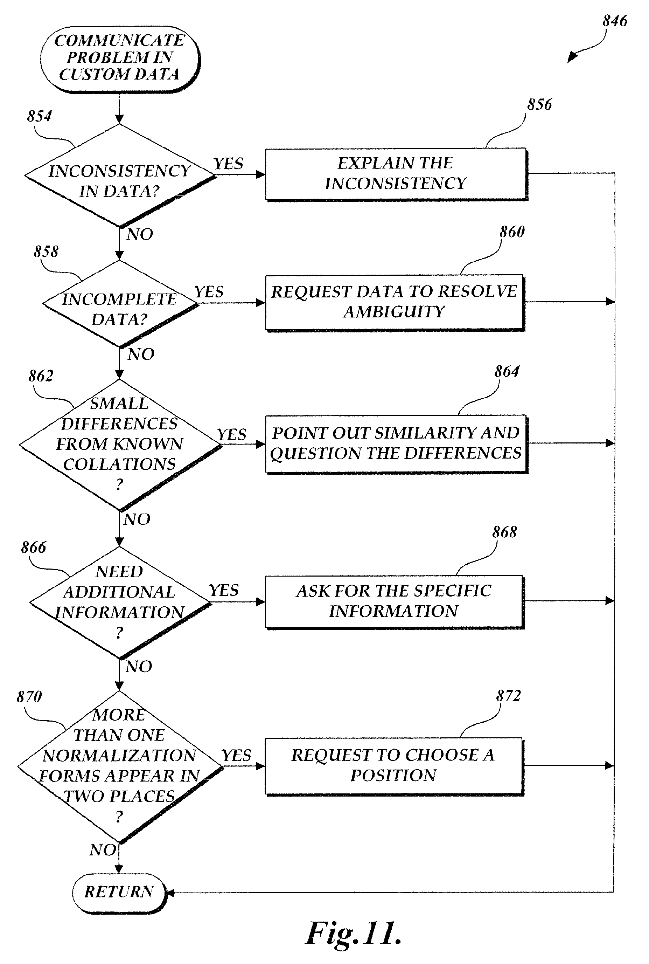

One unique feature of the user interface in the TOOL 204 is to enable a CU to interact with the collation engine while it analyzes custom data to identify collation rules. In an exemplary embodiment of the invention, the interaction is realized by the collation engine posing questions to the CU through user interface 300 and by the CU answering the questions and/or correcting the problems identified by the questions. FIGURE 3 includes exemplary questions that the collation engine may present to a CU through user interface 300. For example, the collation engine noticed that the string "åpple" is placed after the string "Adam." Therefore, question window 312 is presented to the CU in user interface 300. It asks whether placing "åpple" after "adam" is what the CU intends to do. The CU may confirm this placement by clicking on YES button 314, or the CU may find that this placement actually is a mistake, and click on NO button 316. In embodiments of the invention, the CU may correct such misplacement by dragging and dropping a string to its proper place. FIGURE 11 provides examples of the questions that the collation engine may pose and will be discussed in detail later.

In embodiments of the invention, main window 304 in user interface 300 provides a "Show Codepoints" button 314, the actuation of which changes main window 302 into an advanced window 402 that contains additional information, such as Unicode codepoints and Unicode properties. FIGURE 4 illustrates one exemplary implementation of an advanced window 402.

Advanced window 402 contains multiple columns. Besides containing first column 304 that includes sorted strings to be analyzed, additional columns are provided for more advanced users, and are therefore optional. The additional columns supply supplementary information, such as the actual Unicode codepoints that comprise the string in question. For example, as illustrated in FIGURE 4, additional columns CP1 ... CP8 are provided to display the Unicode codepoints for each character in a string.

The Unicode codepoints can help a user understand the linguistic structure of a string and how certain characters impact collation weighting. As noted in the Background of the Invention section, Unicode identifies each symbol in a language with a distinct numerical value and name. The numerical value is called a codepoint. Advanced window 402 displays the codepoints of each symbol in a string. For example, as illustrated in FIGURE 4, the Latin small letter "a" is identified by the codepoint 0061, the Latin small letter "d" is identified by the codepoint 0064, and the Latin small letter "m" is identified by the codepoint 006d. Consequently, the string "adam" is identified by the four codepoints: 0061, 0064, 0061, and 006d.

In addition, advanced window 402 also includes a checkbox 404 for "Unicode Property Info." Upon the selection of checkbox 404, user interface 300 provides information about character properties for the characters in a string. Such information about character properties provides better understanding of the string. In embodiments of the invention, typical character properties include General_Category, Bidi_Class, Canonical_Combining_Class, Decomposition_Type, Decomposition_Mapping. Numerical_Type, and Numerical_Value. For a detailed description about character properties, please see Unicode Character Database, *http:*//*unicode.org*/*public*/*unidata*/*ucd.html*.

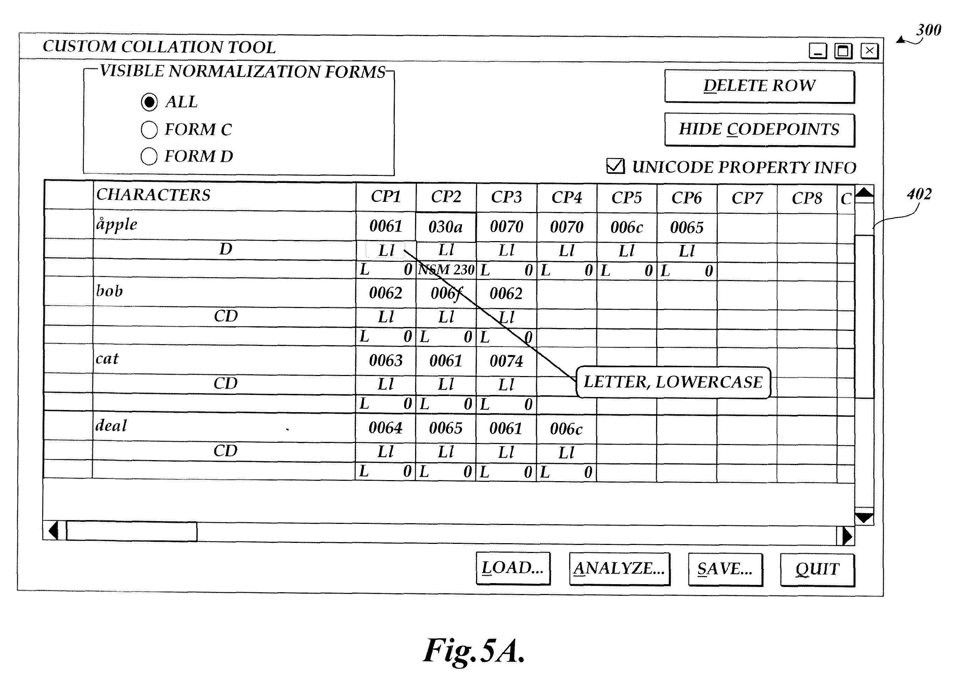

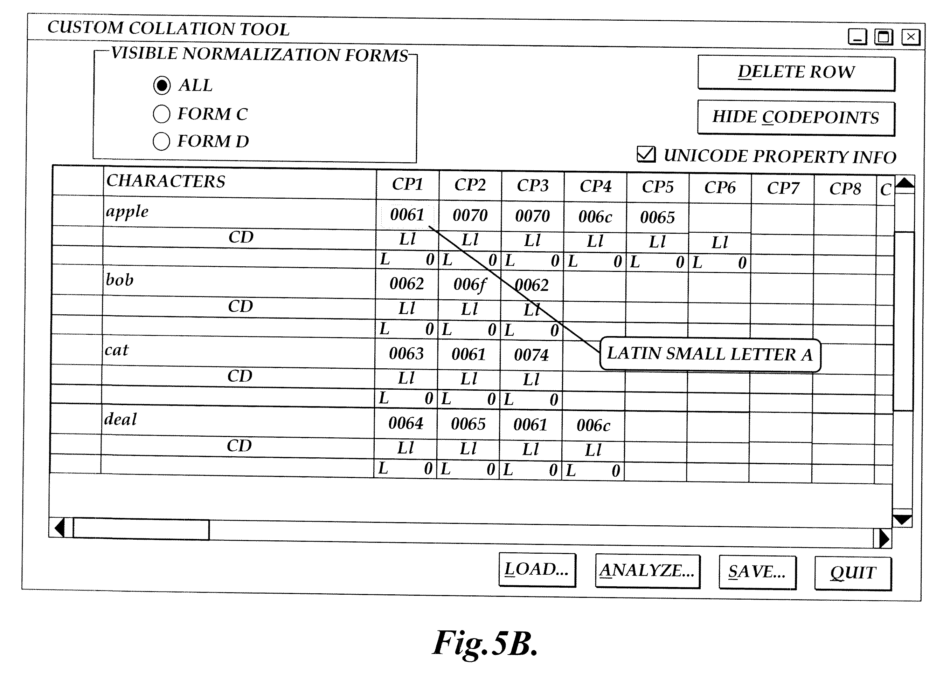

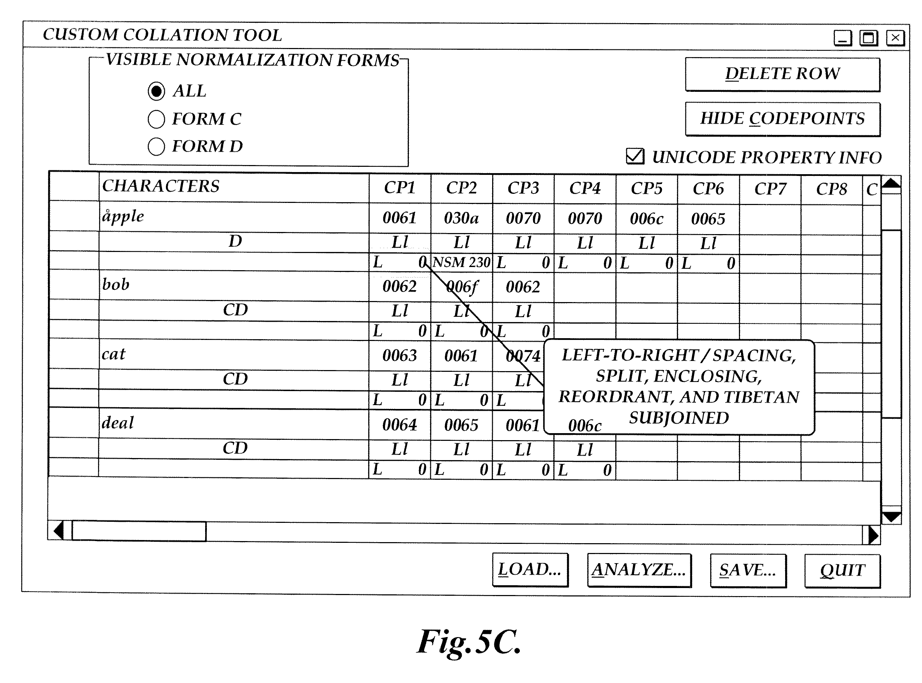

FIGURES 5A-5D illustrate some of the character properties provided by advanced window 402. For example, FIGURE 5A reveals the General_Category value of the Latin small letter "a" is "L1," an acronym for "Letter, Lower case." FIGURE 5B illustrates that the character name of the codepoint 0061 is Latin small letter "a." FIGURE 5C illustrates that the lower case character "a" in the string "åpple" has a Bidi_Class value of "left to right" and a Canonical_Combining_Class value of "0," which stands for "spacing, split, enclosing, reordrant, and Tibetan subjoined."

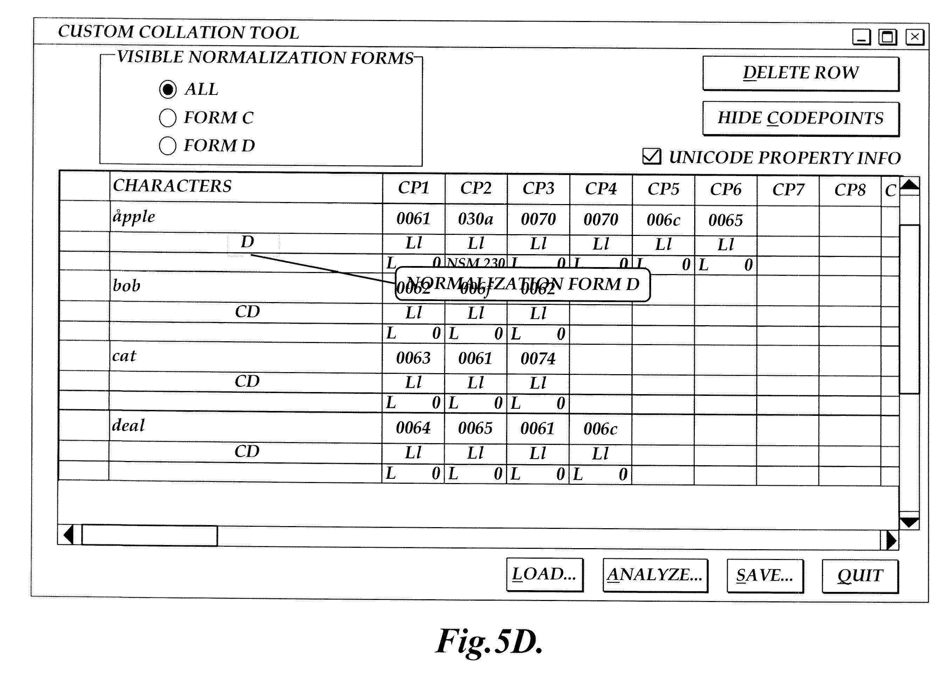

Furthermore, FIGURE 5D illustrates that the string "åpple" is displayed in the normalization form D, which means the combined characters, "å," in the string are displayed in the decomposed form. This means that the "å" is represented by two codepoints: 0061 and 030a, representing the Latin lower case letter "a" and the non-spacing mark "°," respectively.

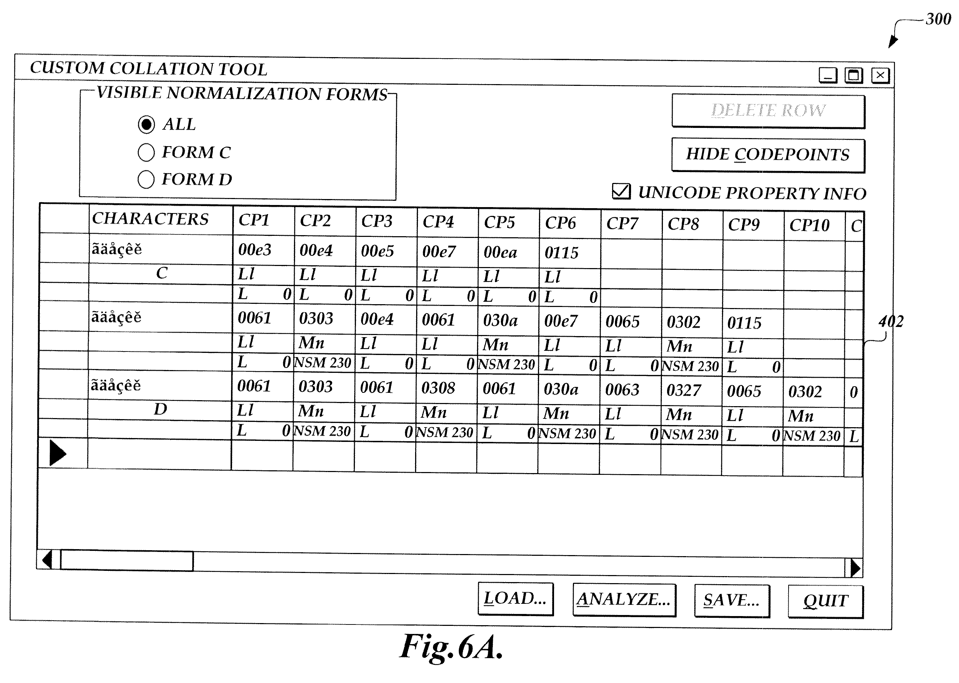

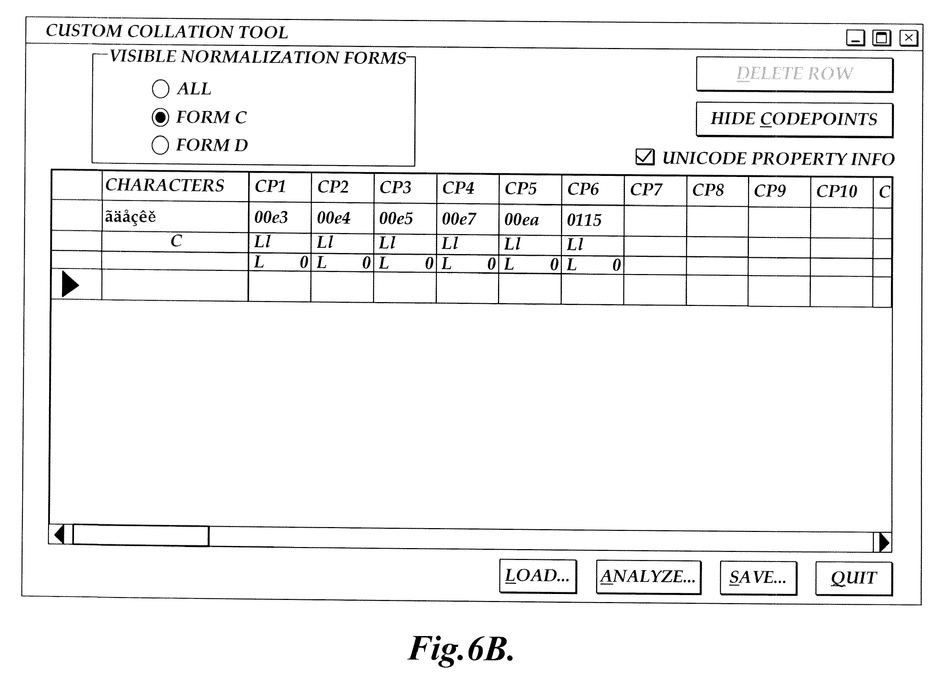

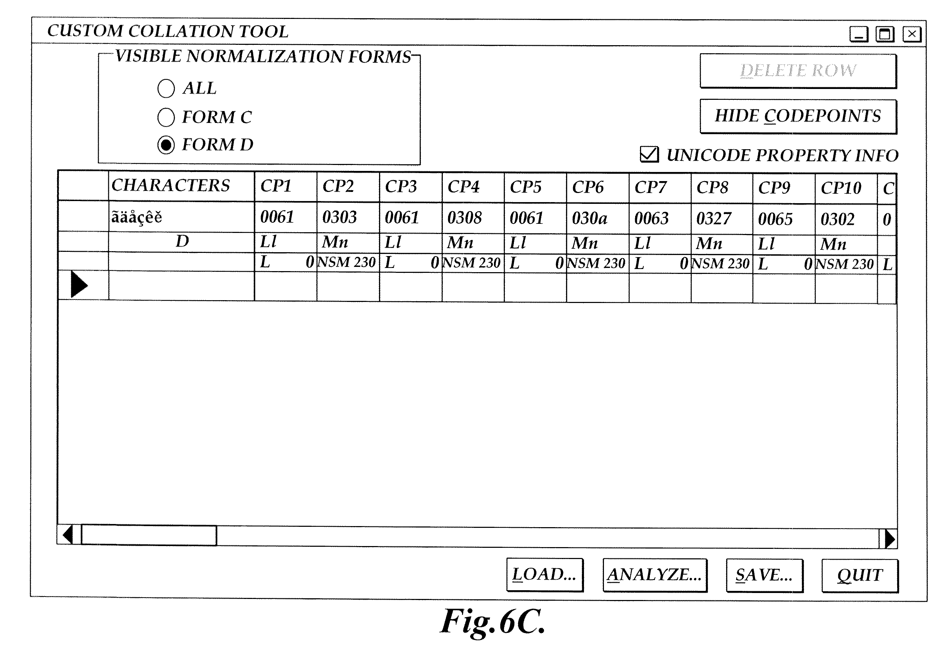

In embodiments of the invention, user interface 300 further displays strings in different normalization forms. As those skilled in the art or related fields know, normalization is the process of removing alternative representations of equivalent sequences from textual data in order to convert the textual data into a form that can be compared for equivalency. In the Unicode standard, normalization refers specifically to processing to ensure that canonical-equivalent and/or compatibility-equivalent strings have unique representations. For more information on normalization in the Unicode standard, please see Unicode Normalization Forms, *http:*//*www.unicode.org*/*report*/*tr15*/. Generally, there are four Unicode normalization forms, namely, Normalization Form C, Normalization Form D. Normalization Form KC, and Normalization Fonn KD. User interface 300 gives a CU the option to decide which normalization form(s) will be displayed. For example, as illustrated in FIGURE 6A, a CU may choose to display a string in all of its normalization forms. As illustrated in FIGURE 6B, a CU may select to display a string in Normalization Form C. Normalization Form C results from the canonical decomposition of a Unicode string, followed by the replacement of all decomposed sequences with primary composites where possible. FIGURE 6C illustrates a string that is displayed in Normalization Form D, which results from the canonical decomposition of the string.

In embodiments of the invention, TOOL 204 provides a CU with the ability to test collation rules identified by the collation engine on applicable data that is not part of the custom data being used for collation creation. A CU can use the testing feature to determine if the collation engine has identified the expected collation rules. A CU can input test data into a test user interface (hereinafter "Test Surface") to have the collation rules applied to the test data to determine if the collation of the test data is correct. In such embodiments of the invention, user interface 300 therefore further includes a test surface. FIGURE 7A illustrates one exemplary implementation of a test surface 700. Test surface 700 first requests a CU to enter a list of strings. For example, as illustrated in FIGURE 7A, test surface 700 displays a set of strings in first column 304: "Cathy," "Resume," "Adam," "Spam," "Deal," "spam," "resumé," and "Catherine." Test surface 700 may also ask a CU to specify whether the test data was sorted before entry. For example, as illustrated in FIGURE 7A. the set of strings contained by first column 304 is indicated as being unsorted. Regardless of whether the test data is sorted or unsorted before it is entered into lest surface 700, a CU may test the current collation rules by actuating "Sort" button 702 to collate the test data.

In embodiments of the invention, test surface 700 can receive a correctly sorted list of strings from a CU. By inputting a correctly sorted list of strings to test, a CU can verify whether applying the current collation rules keeps the current order of the test strings intact. If the current order of the test data is changed, the changes can be highlighted so that they may be resolved by the CU. Test surface 700 can also accept an unsorted list of strings as test data. TOOL 204 can then collate the test data upon the CU actuating "Sort" button 702. The CU can then indicate whether the resultant collation of the test data was correct. If it is not, the CU can assist in the resolution of the problem by correcting the ordering of the collated test data, which is then used to produce correct collation rules.

By using test surface 700, a CU can test the collation rules prior to building a collation binary file. After viewing the collated test data, a CU can identify problems and make corrections to the sorting of test data. The corrections will trigger TOOL 204 to adjust the collation rules accordingly. The collated test data may be added to the custom data as soon as it is verified by the CU.

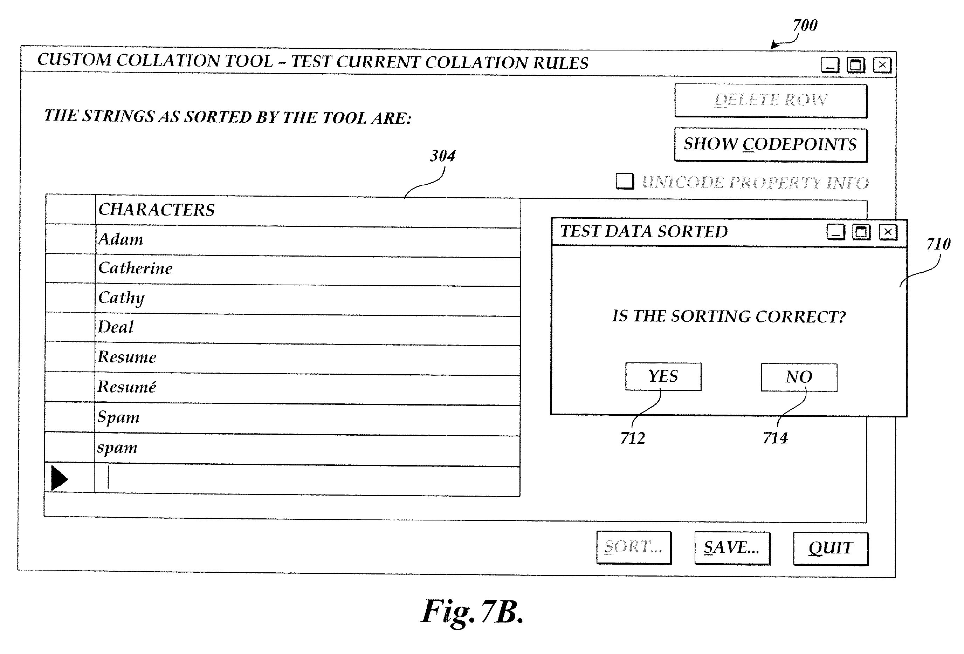

For example, FIGURE 7B illustrates sorting test data contained in first column 304 in FIGURE 7A. After a CU actuates the "Sort" button 702, test data in first column 304 is collated using current collation rules. For example, as shown in FIGURE 7B, test data is now in the order of "Adam," "Catherine," "Cathy," "Bill," "Resume," "Resumé," "Spam," and "spam." FIGURE 7B also includes a query window 710, which asks a CU to confirm whether the sorting as a result of using current collation rules is correct. If the answer is YES, the CU actuates the "Yes" button 712. This confirms that the current collation rules are accurate. If the answer is NO, the CU actuates the "No" button 714. In this case, the CU may proceed to adjust the sorting in first column 304 to show the proper collation.

In summary, user interface 300 enables a CU to interact with the collation creation process executed by the collation engine component of TOOL 204, in real time, so as to ensure creation of the collation support expected by the CU. User interface 300 also provides an engaging and straightforward way for the CU to participate in the collation creation process by hiding the complexity of the collation creation process that is discussed in detail below.

After receiving custom data from a user interface, such as user interface 300 illustrated in FIGURES 3-7B, the collation engine component of TOOL 204 analyzes custom data to identify proper collation rules inherent in the ordering of custom data. During the analysis process, the collation engine asks CU iterative questions to clarify inconsistencies and ambiguities in the custom data, for example, through user interface 300. In some embodiments of the invention, the collation engine receives test data to verify the identified collation rules. FIGURES 8-13 illustrate one exemplary implementation of the functionalities provided by the collation engine of TOOL 204. This exemplary implementation illustrates the collation engine's behavior in the context of some of the distinct and anticipated custom data input scenarios. A CU may input custom data to TOOL 204 in different ways. For example, a CU may provide the entire linguistic data in a single input. Alternatively, a CU may provide only known exceptions to a typical collation of which the CU is aware. For example, a CU may provide known exceptions to collation support for the English language. On the other hand, a CU may insert data on specific linguistic boundaries, such as each letter in a script or all of the diacritic symbols. Finally, a CU may provide different sets of sorted data, where the boundaries of the data have no specific linguistic basis. Because of the wide variety of possible scenarios on custom data input, the collation engine does not have boundaries for the initial size of custom data being provided. During the process of analyzing custom data to identify the underlying collation rules, the collation engine is able to receive additional custom data from a CU.

FIGURE 8 illustrates one exemplary implementation of a collation creation process 800 for establishing collation support for given sorted linguistic data (i.e., custom data). Process 800 is described with reference to TOOL 204 (FIGURE 2) and its user interface 300 illustrated in FIGURES 3-7B. In essence, upon receiving custom data, process 800 analyzes the custom data to identify corresponding collation rules inherent in the ordering of the custom data. In some embodiments of the invention, process 800 asks the CU to verify the custom data after the analysis. Process 800 also allows a CU to enter test data to test the identified collation rules. Process 800 may further build the identified collation rules into a binary file for future use. Optionally, the entire collated custom data may be saved as a word list.

More specifically, process 800 first receives custom data, for example, through a user interface, such as user interface 300 of TOOL 204. See block 802. As mentioned above regarding user interface 300, there are essentially three different approaches to input custom data. The first approach considers the received custom data to have been verified by a CU. This means that the custom data has been sorted and the ordering is consistent with the target collation the CU attempts to emulate. Inputting sorted custom data can be done all at once, in batches, or one entry at a time.

The second approach, on the other hand, relies on the existing collation information the collation engine is holding. No additional custom data will be used until the collation engine has validated custom data it currently holds. As noted earlier, validation is a process that the collation engine uses to determine whether the custom data is both consistent in ordering and complete in coverage. This process usually occurs before the collation engine analyzes the custom data to identify the underlying collation rules. FIGURE 10 illustrates one exemplary implementation of the validation process, and will be discussed in detail later. Therefore, under the second approach, additional validation is an implicit requirement when inserting additional custom data so that the collation engine can continue to consider all the custom data validated.

The third approach is specific to languages that use ideographic systems. Such languages are primarily Chinese, Japanese, and Korean. The third approach is similar to the first approach in that custom data is considered verified. In embodiments of the invention, the collation engine has a basic understanding of many of the phonetic, stroke-based, and other indexing systems. Thus, a CU with a dictionary implementing such an indexing system in electronic form can pass the information in the dictionary directly to the conation engine. In general, under the third approach, it does not matter whether the custom data is in a sorted order or not because explicit collation support for the custom data is already available. Such existing collation support includes pronunciation-based ordering such as the "bopomofo" system for collating Traditional Chinese. Such existing collation support may be stroke count-based orderings. For example, one such ordering is based on the total stroke count within a Han character. Other existing collation supports include government or industry encoding standard-based ordering, such as the GB official standard of the People's Republic of China. In other cases, combinations of the various orderings are used. For example, the "bopomofo" pronunciation-based ordering for traditional Chinese could be used along with all ideographs that have identical pronunciations sorted in stroke order. Another example is the Kanji dictionary, which allows a Japanese reader to easily look up Chinese ideographic characters used in Japanese. Generally. Kanji ideographic characters are ordered by radical (an element in the ideograph that can represent a pronunciation or a core concept) and by stroke (the number of brush strokes needed to draw the character).

Because a given character may have multiple pronunciations in pronunciation sorts, embodiments of TOOL 204 support a frequency count, which identities the number of pronunciations a given character may have. At one given time, TOOL 204 may enable only one pronunciation. TOOL 204 may leave the alternate pronunciations in a disabled state indicating that they are not being used.

Upon receiving custom data under any of the three approaches, process 800 executes a routine 804 to analyze the custom data and identify collation rules manifested by the ordering of the custom data. FIGURE 9 illustrates one exemplary implementation of routine 804 and will be discussed in detail later. In some embodiments of the invention, after executing routine 804, process 800 proceeds to check if the now collated custom data was previously verified by the CU. See decision block 806. As discussed above, depending on how the custom data is initially input, the custom data received by process 800 may or may not have been verified by the CU. In embodiments of the invention, verification is a process that the CU uses to determine whether the ordering of custom data is consistent with the target collation the CU is attempting to emulate. If the custom data was not previously verified, process 800 proceeds to request the CU to verify the now collated custom data. See block 808. In some embodiments of the invention, process 800 may query the CU through user interface 300 as to whether there is any inconsistency in the collated custom data. The query may further ask whether the collation is correct. In embodiments of the invention, custom data is assumed to have been verified unless the CU negates this assumption by answering NO to the query. If the CU replies that the custom data was not previously verified, the CU may proceed to verify the collated custom data. In this situation, process 800 loops back to routine 804 to analyze the now verified custom data because the CU may have changed the ordering of the custom data when verifying the custom data.

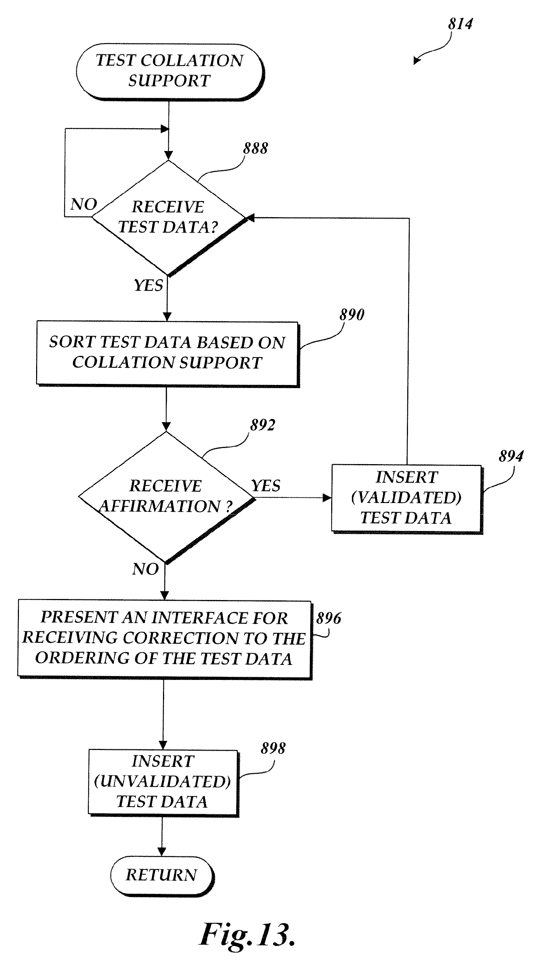

If the answer to decision block 806 is YES, meaning that the custom data has been verified, process 800 proceeds to check if the CU has input more custom data. See decision block 810. If the answer is YES, process 800 loops back to block 802 to receive the additional custom data, which is then analyzed and checked for verification. If the answer to the decision block 810 is NO, meaning that there is no additional custom data from the CU, process 800 proceeds to check if the CU wants to test the current collation rules identified by executing routine 804. See decision block 812. If the answer is YES, process 800 executes a routine 814 that tests current collation rules upon receiving test data from the CU. FIGURE 13 illustrates one exemplary implementation of routine 814 and will be discussed in detail later.

If the answer to decision block 812 is NO, meaning that process 800 receives no request to test current collation rules, process 800 may proceed to build the current collation rules into a binary file. The resultant collation information can be used in the future for collating other linguistic data. See block 816. In some embodiments of the invention, process 800 also allows the CU to save the complete custom data, preferably along with other information. For example, process 800 may save the custom data, possibly along with its Unicode codepoints.

FIGURE 9 illustrates one exemplary implementation of routine 804 that analyzes custom data and identifies collation rules inherent in the ordering of the custom data. In exemplary embodiments of the invention, routine 804 contains four phases. Phase 0 is a preprocessing phase that validates and normalizes the custom data. In embodiments of the invention, routine 804 executes a process 830 to preprocess the custom data. FIGURE 10 provides an exemplary implementation of process 830 and will be discussed in detail later.

After executing process 830 that validates and normalizes the custom data, routine 804 proceeds to Phase 1, which is the first step of identifying collation rules based on the ordering in the custom data. In this phase, routine 804 compares the ordering of the custom data with existing collation support schemes. For example, in the exemplary embodiment of the invention, routine 804 compares the ordering of the custom data with the Windows® default sorting table. See block 832. The Windows® default sorting table is a flat table of 32-bit values that contains the default sort weight for each character whose Unicode codepoint is in the range of 0000-FFFF. The Windows® default sorting table is the basis for all collations. Cunently, more than 70 locales are supported by the Windows® default sorting table. In general, a locale is a unique combination of language, religion, and script that defines a set of preferences for formatting and sorting linguistic data. Thus, it is possible that the desired conation for the custom data may be covered in the Windows® default sorting table. In such a case, no further processing will be required. As illustrated in FIGURE 9, routine 804 checks if there is a matching collation for the custom data in the Windows® default sorting table. See decision block 834. If the answer is YES, the collation rules for the custom data have been identified, routine 804 exits, and process 800 (FIGURE 8) proceeds to the next action, which can be testing the collation rules and/or building the collation rules into a binary file for future use.

If there is no matching collation in the Windows® default sorting table, routine 804 proceeds to Phase 2. Phase 2 determines if any of the available compression and exception tables matches the differences resulting from the comparison that occurred in Phase 1, i.e., the differences between the Windows® default sorting table and the ordering of the custom data. See block 836. As known to those of ordinary skill in the art or other related fields, an exception table lists changes that are to be made to the Windows® default table for a given language. An exception table should be a minimal subset of characters that must have their assigned weights changed for the sake of the given language's collation. Meanwhile, a compression table registers each type of compression, i.e., sort elements that contain more than one Unicode codepoint. In embodiments of the invention, the knowledge that a particular compression or exception table has a resemblance to the custom data may help the collation engine formulate clarifying questions to be presented to the CU. In situations where the custom data closely matches an existing exception or compression table, the possibility of a mistake will be presented to CU.

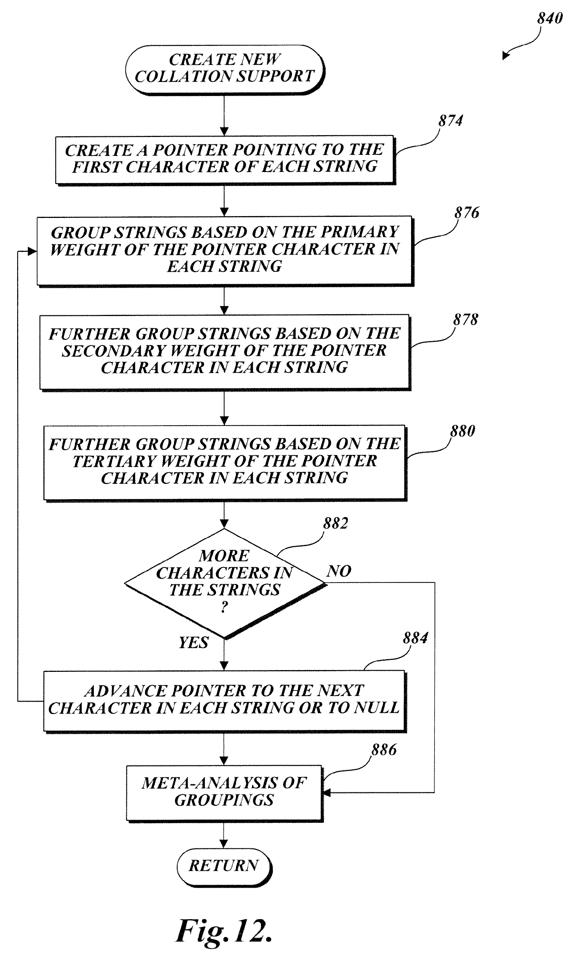

If there is a match between the differences resulting from the comparison that occurred in Phase 1 and the information in one of the compression and exception tables (see decision block 838), routine 804 returns to process 800 (FIGURE 8). Process 800 has found a collation match for the custom data and proceeds to the next action, which can be to test and/or build the collation information. If no match is found in Phase 2, routine 804 proceeds to execute a process 840 to generate new collation support by analyzing the ordering of the custom data. See block 840. This is the last phase, i.e., Phase 3, for routine 804. FIGURE 12 illustrates one exemplary implementation of process 840 and will be discussed in detail later. Routine 804 then exits.

As noted above, FIGURE 10 illustrates one exemplary implementation of process 830 that preprocesses custom data in preparation for the generation of proper collation support. Process 830 first validates the custom data by checking the custom data for any inconsistencies or contradictions. See block 842. Process 830 then proceeds to determine if any problem has been found with the custom data. See decision block 844. If there are inconsistencies and/or contradictions in the custom data, process 830 executes a routine 846, which communicates the problem to the CU who input the custom data. After executing routine 846, process 830 determines whether it has received any correction addressing the problem. See decision block 848. If the answer to decision block 848 is YES, process 830 proceeds to apply the correction. See block 850. Process 830 then returns to block 842 to determine whether there are inconsistencies or contradictions in the corrected custom data. In some embodiments of the invention, the collation engine is not flexible about probtetns such as inconsistencies or contradictions in the custom data. Unless such problems are corrected, the collation engine will not proceed. Therefore, if the answer to decision block 848 is NO, meaning the process 830 received no correction to the problem identified when validating the custom data, process 830, parent routine 804, and process 800 terminate.

In some embodiments of the invention, the collation engine sends messages concerning the problems it finds in the custom data only when a certain point is reaclaed, i.e., when there are too many problems for the collation engine to proceed further.

In most situations, custom data received by the collation engine will contain primarily valid data with only minor discrepancies. Thus, the collation engine assumes that the custom data is accurate information. The iterative nature of questions and answers during process 830 is collaborative, working with the CU in real time to determine the proper collation support for the custom data.

In some embodiments of the invention, when the quantity of the custom data and its coverage is acceptable to the collation engine, i.e., that nothing is inconaptete or inconsistent, the collation engine sends a message to a user interface, such as user interface 300, to indicate to the CU that the data has been validated. As illustrated in FIGURE 10, if the answer to decision block 844 is NO, meaning that process 830 finds no problem with the custom data, process 830 proceeds to normalize the custom data. See block 852. Normalization ensures that both the composed version (Normalization Form C) and the decomposed version (Normalization Form D) of a string are treated equally. Process 830 then exits. In some embodiments of the invention, only after process 830 has been successfully completed does routine 804 (FIGURE 9) begin to analyze the ordering of the custom data to identify collation rules.

After identifying the problems in custom data (FIGURE 10), routine 846 (FIGURE 11) communicates the problems to the CU through user interface 300. The CU can then provide information to fix the problem. For example, if there are inconsistencies and/or contradictions in the custom data (see decision block 854), routine 846 sends a message to user interface 300 to prompt the CU to help determine how to resolve the inconsistency. See block 856. The message may explain the inconsistency and even provide proposals for resolving the inconsistency. Inconsistencies and/or contradictions in custom data occur, for example, when the same linguistic characters are sorted in two different ways. One example of the inconsistency is that two canonically equivalent strings are distanced from each other in the custom data. As known by one of ordinary skill in the art and related fields, canonically equivalent strings are not distinguishable by a user, and therefore should be treated as the same, be displayed identically, and be sorted identically. Further, when there is a problem of missing and/or incomplete data (see decision block 858), routine 846 will send a message to user interface 300 to prompt the CU to provide additional strings that use the character in question to further illustrate collation behavior of the character. See block 860. Such a problem may occur when, for example, it is clear that there seems to be a special behavior for a linguistic character or accent, yet there is not enough information to determine what the behavior is.

Additionally., small differences from an existing collation support scheme may exist in the custom data. In this case (see decision block 862), routine 846 sends user interface 300 a message that points out the similarity, and prompts the CU to verify the difference. In some embodiments of the invention, the message does not reference the specific language with which the similarity exists so as to avoid any potential geo-politically sensitive issues. See block 864. This occurs when there appears to be specific variances to the collation used elsewhere, such as a script sorting uppercase before lowercase, despite the usual converse policy.

At times, additional information may be needed for a script or range of characters. This occurs when there appears to be missing information that may or may not be important. For example, if a CU is using the Latin script, but is missing letters within the Latin range, the collation engine may suggest a position in the collation rules for a missing letter. The collation engine then prompts the CU to confirm the suggested position, or to reject the position and suggest an appropriate position. In such a case (see decision block 866), routine 846 sends a message to user interface 300 to ask for the specific information needed. See block 868.

Furthermore, custom data may treat two equivalent strings as if they are not equal. For example, two strings may be equivalent because of the Unicode character properties and/or Unicode normalization. However, the custom data treats them as if they are not equal. In this case (see decision block 870), routine 846 sends a message to user interface 300 to prompt the CU to choose which position is correct. See block 872. Upon a user selecting a position, the other position is removed.

Because correct data is the essential premise of any effective collation creation effort, custom data usually needs some adjustment in order for it to be correct data for collation creation. Therefore, routine 846 may be invoked at any time for the CU to adjust custom data during the collation creation process.

FIGURE 12 illustrates one exemplary implementation of process 840 that is used to generate new collation rules based on the ordering of custom data. In essence, process 840 analyzes the custom data to determine the collation rules inherent in the ordering of the custom data. Specifically, process 840 parses the characters in the sorted strings to determine the break points in the strings and the nature of the break, i.e., whether the break is based on primary difference, secondary difference, tertiary difference, or other differences among the compared strings. Process 840 achieves this goal by making use of Unicode character properties and collation pattern inherent in the ordering of the custom data.

During the execution of process 840, the collation engine may send clarifying questions to a CU because if any problem with the custom data occurs in process 840, it is likely that more information is needed to generate collation support that is completely correct. For example, if process 840 wants to confirm a specific behavior of a certain character, process 840 may ask the CU to input more strings containing the character to exemplify the behavior of the character. The query may also specify the options of positioning a character, and ask a CU to choose an option. Further, process 840 displays visual cues in the custom data to indicate the collation support. A CU can thus adjust the ordering of the strings to provide the collation engine instant feedback about the collation support.

In an exemplary embodiment of the invention, at each action in process 840, the current representation of the relationship between codepoints and sort weights, as described by the custom data and validated by the collation engine, is stored. The collation engine can then reference stored collation data at any time, thus enabling the CU to continue to refine the collation data.

In embodiments of the inslention, when analyzing the collation patterns, for example, the weighting structures in the custom data, the collation engine first starts with the Windows® default table. The collation engine then goes to the existing exception and compression tables, and then creates internal exception and/or compression tables as well as additional data when necessary. The goal of the collation engine is to create the minimum subset of the collation support required to capture the ordering in the custom data. Therefore, if a CU knows what the minimum subset is, the CU may present it to TOOL 204 directly. The majority of the complexity of the collation engine's analysis work comes from the fact that a CU rarely has the minimum subset concerning a given language.

More specifically, as shown in FIGURE 12, process 840 parses the characters in each string, one character at a time. In one exemplary embodiment of the invention, process 840 first creates a pointer pointing to the first character of each string in the custom data. See block 874. Process 840 separates each string into different groupings based on the character that the pointer is pointing to (hereinafter "pointer character"). Process 840 first groups strings based on the primary difference. i.e., the alphabetic weight of the pointer character in each string. See block 876. Process 840 analyzes the ordering of the strings and determines the alphabetic weight of each pointer character. Process 840 further groups the groups of strings resulting from executing block 876 based on the secondary differences, i.e., diacritic weighting of the pointer character in each string. See block 880. Next, process 840 further groups the groups of strings resulting from executing block 878 based on the tertiary difference, i.e., the casing weight of the pointer character in each string. See block 880.

After finding the break point and the nature of the break based on the pointer character in each string, process 840 determines if there are other characters in the strings. See decision block 882. If the answer is YES, process 840 advances the pointer in each string to the next character in each string or to NULL if there is no further character in a string. See block 884. From there, process 840 returns to block 876 and begins to group strings based on the primary, secondary, or tertiary difference of the pointer character in each string. At the end of the loop, process 840 identifies both the first break point for each string and an initial ordering of the initial characters in the strings.

In embodiments of the invention, process 840 treats each character as being a unique sorting element and waits until an apparent contradiction is found in the data prior to looking for any expansions, compressions, and other constructs that cause collation to be more complicated. In embodiments of the invention, during one grouping section, if a difference appears to be ignored at some level, it will be ignored by the collation engine for the rest of this grouping section. For example, process 840 may examine the following custom data:

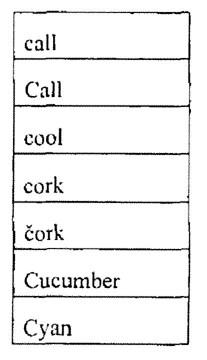

In this sample, there are variations in case and diacritics. The first grouping (block 876) groups the data into "c" grouping based on the alphabetic weight of the first character. It ignores the variations in case and diacritics. However, during the second grouping (block 878), process 840 notices that the lower case "c" comes after the plain lower case "c." During the third grouping (block 880), process 840 further notices that the lower case "c" comes before the upper case "C." Therefore, by analyzing this sample data, process 840 identities these collation rules: lower case "c" comes before upper case "C" and the plain lower case "c" comes before the lower case 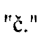

During Phase 3, the presence of special collation rules is determined and analyzed as well. The special collation rules include, for example, the "REVERSE DIACRITIC" rule for collation in French. In French, diacritics are evaluated in a string from back to from front. Therefore, the word "côte" sorts before the word "coté" in French, while other languages would not sort the words this way. Another example is the "DOUBLE COMPRESSION" rule seen in Hungarian, where the existence of a grapheme such like "dsz" implies that the grapheme "ddsz" is treated as "dszdsz" for collation purpose. In embodiments of the invention, these special rules are saved as additional data for the collation support of the custom data.

If the answer to decision block 882 is NO, meaning that process 840 has processed all the characters in each string, process 840 performs a meta-analysis of the groupings. See block 886. The meta-analysis examines the way that specific characters such as diacritics and other combining marks, as well as scripts in general, are handled as compared with existing Windows® sorts. For example, the meta-analysis may note the different behavior of the use of Anusvara across many of the Indic languages within Windows® and the custom data. The meta-analysis will use similarity to guide decisions about the custom data. If the decision is incorrect, the CU can override it in later review of the collated custom data.

After identifying collation rules for the custom data, in some embodiments of the invention, the collation engine may test the collation rules. FIGURE 13 illustrates a routine 814 that tests current collation rules. The discussion of routine 814 will reference the test surface 700 illustrated in FIGURES 7A and 7B. As discussed above, test surface 700 may receive either a correctly sorted list of strings or an unsorted list of strings. If the test surface 700 receives a correctly sorted list of strings, a CU may verify whether the list of strings remains unchanged after applying the current collation rules. If test surface 700 receives an unsorted list of strings, the CU is then given the opportunity to confirm whether the collation on the unsorted test data is correct. If the collation is not correct, the CU can adjust the ordering to assist the resolution of the collation problem.

More specifically, as shown in FIGURE 13, routine 814 first determines whether it receives test data. See decision block 888. If the answer is NO, routine 814 will not proceed. If the answer is YES, routine 814 collates the test data based on current collation rules. See block 890. As illustrated in FIGURE 7B, in embodiments of the invention, the collated test data will be presented to the CU through a test surface 700. The CU indicates whether the collation is correct or not. Routine 814 determines whether it has received affirmation from the user. See block 892. If the answer is YES, meaning that the collation is correct, routine 814 proceeds to insert the collated test data, which has been properly validated and verified, into the custom data. See block 894. Routine 814 then returns to decision block 888 to determine whether additional test data has been received from the CU.

If the answer to decision block 892 is NO, meaning that the CU does not approve the collation support, routine 814 proceeds to present an interface for receiving corrections from the CU to the current ordering of the collated test data. The test data will then be regarded as verified by CU. See block 896. In some embodiments of the invention, the test surface 700 allows the CU to drag and drop a string to its proper place. Routine 814 then proceeds to insert the verified but invalidated test data back to the custom data. See block 898. In this situation, the collation creation routine 804 (FIGURE 9) will be performed on the updated custom data again. As a result, proper collation rules will be created according to the verified test data.

While the preferred embodiment of the invention has been illustrated and described, it will be appreciated that various changes can be made therein without departing from the spirit and scope of the invention.

The embodiments of the invention in which an exclusive property or privilege is eiaicned are defined as follows:

## Claims

1. A computer-implemented method for automatically establishing collation support for sorted linguistic data, comprising:
(a) searching existing collation support schemes to locate a matching collation support for the sorted linguistic data; and
(b) if no existing collation support for the sorted linguistic data is found, analyzing the sorted linguistic data to create a new collation support.

2. The computer-implemented method of Claim 1, wherein analyzing the sorted linguistic data to create a new collation support includes:
analyzing each character ("character in focus") in each string contained in the sorted linguistic data, starting from the first character in each string.

3. The computer-implemented method of Claim 2, wherein analyzing each character in each string includes:
identifying a primary weighting structure by grouping strings based on the primary weight of the character in focus in each string;
identifying a secondary weighting structure by further grouping strings based on the secondary weight of the character in focus in each string; and
identifying a tertiary weighting structure by further grouping strings based on the tertiary weight of the character in focus in each string.

4. The computer-implemented method of Claim 2, further comprising analyzing behaviors of special characters.

5. The computer-implemented method of Claim 4, wherein special characters include diacritics, combining marks, and scripts.

6. The computer-implemented method of Claim 1, further comprising pre-processing the sorted linguistic data prior to executing (a) and (b).

7. The computer-implemented method of Claim 6, wherein pre-processing the sorted linguistic data includes validating the sorted linguistic data to ensure the generation of corrected collation support based on the sorted linguistic data.

8. The computer-implemented method of Claim 7, wherein validating the sorted linguistic data includes:
identifying at least one problem in the sorted linguistic data;
requesting correction to the sorted linguistic data; and
applying the correction to the sorted linguistic data upon receiving the correction.

9. The computer-implemented method of Claim 6, wherein pre-processing the sorted linguistic data includes normalizing the sorted linguistic data.

10. The computer-implemented method of Claim 1, further comprising:
collating the sorted linguistic data using the collation support;
verifying the collated linguistic data; and
repeating (a) and (b) on the collated linguistic data if the verification results in a change to the collated linguistic data.

11. The computer-implemented method of Claim 10, wherein verifying the collated linguistic data includes determines whether the ordering of the collated linguistic data is correct.

12. The computer-implemented method of Claim 1, further comprising testing the collation support.

13. The computer-implemented method of Claim 12, wherein testing the collation support includes:
receiving test data; and
collating the test data using the collation support.

14. The computer-implemented method of Claim 13, further comprising:
applying a correction to the collated test data, upon receiving a correction to the collated test data,
inserting the corrected test data into the sorted linguistic data; and
repeating (a) and (b) of Claim 1.

15. A computing system for automatically establishing collation support for sorted linguistic data, comprising a programmed data processor for:
(a) searching existing collation support schemes to locate a matching collation support for the sorted linguistic data; and
(b) if no existing collation support for the sorted linguistic data is found, analyzing the sorted linguistic data to create a new collation support.

16. The computing system of Claim 15, wherein analyzing the sorted linguistic data to create a new collation support includes:
analyzing each character ("character in focus") in each string contained in the sorted linguistic data, starting from the first character in each string.

17. The computing system of Claim 16, wherein analyzing each character in each string includes:
identifying a primary weighting structure by grouping strings based on the primary weight of the character in focus in each string;
identifying a secondary weighting structure by further grouping strings based on the secondary weight of the character in focus in each string; and
identifying a tertiary weighting structure by further grouping strings based on the tertiary weight of the character in focus in each string.

18. The computing system of Claim 16, wherein the programmed data processor also analyzes behaviors of special characters.

19. The computing system of Claim 18, wherein special characters include diacritics, combining marks, and scripts.

20. A computer-readable medium containing computer-executabte instructions for automatically establishing collation support for sorted linguistic data that, when executed:
(a) search existing collation support schemes to locate a matching collation support for the sorted linguistic data; and
(b) if no existing collation support for the sorted linguistic data is found, analyze the sorted linguistic data to create a new collation support.

21. The computer-readable medium of Claim 20, wherein analysis of the sorted linguistic data to create a new collation support includes:
analyzing each character ("character in focus") in each string contained in the sorted linguistic data, starting from the first character in each string.

22. The computer-readable medium of Claim 21, wherein analyzing each character in each string includes:
identifying a primary weighting stnicture by grouping strings based on the primary weight of the character in focus in each string;
identifying a secondary weighting structure by further grouping strings based on the secondary weight of the character in focus in each string; and
identifying a tertiary weighting structure by further grouping strings based on the tertiary weight of the character in focus in each string.

23. The computer-readable medium of Claim 21, wherein the computer-executable instructions when executed also analyze behaviors of special characters.

24. The computer-readable medium of Claim 23, wherein special characters include diacritics, combining marks, and scripts.

25. A computing system for automatically establishing collation support for sorted linguistic data, comprising:
(a) an input device;
(b) a display, wherein the display includes a user interface; and
(c) a processor coupled with the input device and the display for:
(i) receiving sorted linguistic data from the input device:
(ii) establishing collation support for the sorted linguistic data; and
(iii) displaying the sorted linguistic data on the user interface.

26. The computing system of Claim 25, wherein the processor also:
sends a query to the user interface concerning the sorted linguistic data: and
applies change to the sorted littguistic data upon receiving from the input device a change to the sorted linguistic data in responding to the query.

27. The computing system of Claim 25, wherein display of the sorted linguistic data on the user surface includes indicating visually a distinction between two compared strings in the sorted linguistic data.

28. The computing system of Claim 27, wherein the distinction includes a break point ofa string in the sorted linguistic data.

29. The computing system of Claim 28, wherein the distinction includes the type of the weight difference at the break point.

30. The computing system of Claim 25, wherein establishing collation support for the sorted linguistic data includes:
(a) searching existing collation support schemes to locate a matching collation support for the sorted linguistic data; and
(b) if no existing collation support for the sorted linguistic data is found, analyzing the sorted linguistic data to create a new collation support.

31. The computing system of Claim 30, wherein the processor also preprocesses the sorted linguistic data so that it is consistent in its ordering and complete in coverage.

32. The computing system of Claim 30, wherein analyzing the sorted linguistic data to create a new collation support includes:
analyzing each character ("character in focus") in each string contained in the sorted linguistic data, starting from the first character in each string.

33. The computing system of Claim 32, wherein analyzing each character in each string includes:
identifying a primary weighting structure by grouping strings based on the primary weight of the character in focus in each string;
identifying a secondary weighting structure by further grouping strings based on the secondary weight of the character in focus in each string; and
identifying a tertiary weighting structure by further grouping strings based on the tertiary weighting of the character in focus in each string.

34. The computing system of Claim 32. wherein the processor also analyzes behaviors of special characters.

35. The computing system of Claim 34, wherein special characters include diacritics, combining marks, and scripts.

36. The computing system of Claim 25, wherein the processor also sends a verification request to the user interface after establishing collation support for the sorted linguistic data.

37. The computing system of Claim 36, wherein the processor also:
applies a change to the sorted linguistic data upon receiving the change from the input device in responding to the verification request; and
reestablishes collation support for the sorted linguistic data after applying the change.

38. The computing system of Claim 25, wherein the processor also tests the collation support after establishing collation support for the sorted linguistic data.

39. The computing system of Claim 38, wherein the test of the collation support includes:
receiving test data from the input device; and
collating the test data using the collation support.

40. The computing system of Claim 39, wherein the processor also:
displays the collated test data to the user interface;
applies a correction to the collated test data upon receiving a correction to the collated test data from the input device;
inserts the corrected test data into the sorted linguistic data; and
reestablishes collation support for the sorted linguistic data.
